Europäisches Patentamt

European Patent Office

Office européen des brevets

(11) Publication number: **0 290 636**

**A1**

## (12) EUROPEAN PATENT APPLICATION

(21) Application number: **87106756.7**

(22) Date of filing: **09.05.87**

(51) Int. Cl.4: **A23F 5/44 , A23F 5/40**

(43) Date of publication of application:
**17.11.88 Bulletin 88/46**

(84) Designated Contracting States:
**AT BE CH DE ES FR GB IT LI LU NL SE**

(71) Applicant: **SOCIETE DES PRODUITS NESTLE S.A.**
**Case postale 353**
**CH-1800 Vevey(CH)**

(72) Inventor: **Watercutter, Steven N.**
**Murrstrasse 23**
**D-7144 Asperg(DE)**

(54) **A dry blended mixture for instant drink and process for its preparation.**

(57) The invention concerns a dry blended mixture for instant drink and process for its preparation.

The dry blended mixture contains extracted roasted coffee and extracted roasted maize, said extracted maize being obtained from roasted maize having a density comprised between 500 and 600 g/l, a roast loss between 17 and 25%, an L-value comprised between 37 and 44 and a G.N.-value comprised between 9 and 11.

EP 0 290 636 A1

# A dry blended mixture for instant drink and process for its preparation

The invention concerns a dry blended mixture for instant drink and a process for its preparation.

With the increasing consumption of coffee mixtures, alternatives have been sought to chicory and caramelized sugar to produce coffee mixtures with lower amount of soluble coffee solids, but a predominating coffee flavor in the cup. Owing to the fact that maize is in abundant supply in many countries throughout the world, it would be interesting to roast maize and use it in a mixture with roasted coffee for preparing a soluble end-product. However, with the roasting of maize, several problems arise: firstly avoiding, during the roasting, puffing or popping of the kernels; secondly activating the roasting in the shortest possible time and finally producing an acceptable roast flavor. The dry blended mixture according the present invention permits all the above requirements to be met.

The invention concerns a dry blended mixture for instant drink, containing extracted roasted coffee and extracted roasted maize, said extracted maize being obtained from roasted maize having a density comprised between 500 and 600 g/l, a roast loss between 17 and 25 %, an L-value comprised between 37 and 44 and a G.N.-value comprised between 9 and 11.

All the types of maize can be used according the invention. The varieties of maize normally have a moisture content comprised between 10 and 12 %, an ash-content between 1 and 2 %, a fat-content between 4 and 6 %, a protein-content between 9 and 11 % and a carbohydrate-content between 72 and 75 %.

For obtaining a maximum coffee taste in the cup, the mixture contains between 5 and 40 % of coffee and between 60 and 95 % of maize.

The density of the roasted maize is preferably comprised between 530 and 580 g/l. The roast loss is represented by the moisture of the maize and reaction of substances during the roasting process.

The L-value is a color measurement carried out by means of a Gardener apparatus. This test is based on the measure of the intensity of a beam of light after it has been reflected by the sample under study. The factor L designates this reflected light intensity. An L-value of 100 % means total reflexion and L = 0 the absence of reflexion. The incident beam has a wave-length of 546 nm.

The G.N. is determined with a torrefactometer, as described in European Patent No. 106 135. The G.N. corresponds to the brilliance obtained through a green filter. The value varies between 0 (absolute black) and 100 (pure white).

The dry blended mixture according the invention has a density between 200 and 300 g/l.

According one embodiment, it is also possible to have a mixture containing chicory. In this case, the proportions are following: 5 to 40 % coffee, 60 to 95 % maize and 25 to 20 % extracted chicory.

The dry mixture according the invention can be used as instant drink either in water or in milk, to obtain a drink with good coffee taste and character, but with less caffeine.

The invention concerns further a process for the preparation of this dry blended mixture, wherein the maize and the green coffee separately or in mixture, are roasted, extracted, stripped, evaporated and dried to obtain the desired instant powder. The maize is roasted at a temperature comprised between 200 and 250°C during between 20 and 35 min. The energy input preferably decreases from the beginning to the end of the roasting. The type of equipment roaster used is the same as for roasting coffee, so that it minimizes or eliminates additional capital investment requirements. In order to avoid any puffing of the kernels, it is preferable not to roast for less than 20 minutes. A roasting time of more than 35 minutes is not acceptable essentially for economical reasons. It is also possible according the process of the invention to roast jointly maize and coffee simultaneously. In this case the roasting duration may be slightly below 20 minutes.

After the roasting of the maize, either alone or in admixture with coffee, roasted maize and coffee are submitted to a joint extraction in a known state of the art extraction process operating at pressures of from 1 up to 20 bars, for example slurry or cells extraction. The ratio of roasted coffee and maize may lie within the ranges of:

    coffee 5 - 40 %

    maize 60 - 95 %

to obtain an extract of reasonable coffee taste. Afterwards, the extract is stripped, evaporated and dried according known techniques.

The roasted maize and roasted coffee may be submitted to separate extractions in a known state of the art extraction processes with the composite extracts being mixed to give proportions of:

    coffee 5 - 40 %

    maize 60 - 95 %

to obtain an extract of acceptable coffee taste or likewise. The extracts obtained from two separate extraction processes may be evaporated and dried separately via an appropriate state of the art drying technique or techniques and subsequently dry blended to obtain mixtures of acceptable coffee taste or for that matter acceptable coffee-flavoured maize taste profiles.

The rest of the description is made with reference to the following examples.

Examples 1 to 8

Table 1 illustrates the results of roasting a yellow German variety of field maize. The energy input was by burning natural gas. In examples 1 to 4, the roaster was a Gothot type IRHS (laboratory roaster) and for the others a Gothot type IRHH (small scale - production roaster).

| Example | End weight (kg) | Roast loss (%) | Roast duration (min) | Temperature beginning | end °C | L-value roasted product | Density g/l | gas need m3/kg roasted product |
|---|---|---|---|---|---|---|---|---|
| 1 | 19,50 | 19,2 | 37 | 140 | 228 | 38,9 | 578 | 0,095 |
| 2 | 19,33 | 17,6 | 37 | 110 | 228 | 39,3 | 573 | 0,128 |
| 3 | 19,57 | 18,4 | 27 | 140 | 226 | 40,9 | 514 | 0,086 |
| 4 | 19,82 | 17,8 | 38 | 140 | 228 | 41,8 | 549 | 0,094 |
| 5 | 38,9 | 19,3 | 24 | 102 | 250 | 40,9 | 509 | 0,138 |
| 6 | 37,4 | 24 | 27,5 | 120 | 248 | 44,8 | 536 | 0,149 |
| 7 | 37,6 | 24 | 23,5 | 180 | 246 | 43,0 | 553 | 0,120 |
| 8 | 38,4 | 22,2 | 23,5 | 180 | 246 | 43,7 | 557 | 0,114 |

The raw maize has a density of 800 g/l. The obtained roasted maize could be considered as not puffed or popped. Roast losses according these examples were established as satisfactory when tasting brews of ground roasted maize. The energy input was of 15 m3/h for the first ten minutes and of 13 m3/h for the rest of the roasting.

Example 9

A blend of 70 % yellow field maize roasted according example 6 and 30 % light roasted coffee is extracted with water at temperatures exceeding the atmospheric boiling point (165°C) in a series of four pressure vessels (cells extraction). An extract containing coffee and maize dissolved solids is produced having an average 7 - 8 % concentration in solution. The yield of extracted solids obtained range between 40 and 60 %. The extract obtained was processed and dried via known state of the art methods to give an instant coffee-flavoured beverage.

Example 10

A blend of 40 % yellow field maize roasted according example 1 and 60 % medium roasted coffee is extracted as in example 9. The extract of coffee/corn dissolved solids has an average 9-10 % solution concentration.. The yield of extracted solids reached was 50 %. The extract was evaporated and dried to give an instant coffee flavoured beverage.

Example 11

A yellow field maize roasted the same as in example 7 was extracted alone in a process the same as example 9 and 10 and dried giving a 100 % instant maize powder.

This maize powder was blended into conventionally produced coffee extract together with an instant chicory powder to give a mixed extract of 50 % maize solids 30 % coffee solids and 20 % chicory solids. The composite extract was dried conventionally to give an instant coffee-flavoured beverage.

Claims

1. A dry blended mixture for instant drink, characterised in that it contains extracted roasted coffee and extracted roasted maize, said extracted maize being obtained from roasted maize having a density comprised between 500 and 600 g/l, a roast loss between 17 and 25 %, an L-value comprised between 37 and 44 and a G.N.-value comprised between 9 and 11.

2. A dry blended mixture according claim 1, characterised in that it contains between 5 to 40 % coffee and between 60 to 95 % maize.

3. A dry blended mixture according claim 1, characterised in that it contains between 5 to 40 % coffee, between 60 to 95 % maize and between 15 to 20 % extracted chicory.

4. A dry blended mixture according claim 1, characterised in that it has a density between 200 and 300 g/l.

5. A process for the preparation of the dry blended mixture according claims 1 to 3, characterised in that the maize and the green coffee separately or in mixture, are roasted, extracted, stripped, evaporated and dried to obtain the desired instant powder.

6. A process according claim 5 characterised in that the maize is roasted at a temperature comprised between 200 and 250°C during between 20 and 35 min.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 006 646 (PROCTER & GAMBLE) <br> * Claims 1,2; page 5, lines 18-24 * <br> --- | 1,2,4-6 | A 23 F 5/44 <br> A 23 F 5/40 |
| A | US-A-1 348 999 (J. KELLOGG) <br> * Claim 1; page 1, line 42; page 2, lines 42-51 * <br> --- | 1 | |
| A | GB-A- 2 472 (J. KELLOGG)(A.D. 1915) <br> * Claim 1; page 2, lines 22-25; page 2, lines 47-48 * <br> --- | 1 | |
| A | DE-C- 166 824 (A. PAUDLER) <br> * Claims; page 1, lines 61-65 * <br> --- | 1,6 | |
| A | FOOD SCIENCE & TECHNOLOGY ABSTRACTS, no. 75-10-H1605 (75052580); K. MASTERS et al.: "Enzyme treatment reduces extract drying cost", & FOOD ENGINEERING, vol. 46, no. 11, p. 73-75, 1974 <br> * Abstract * <br> --- | 1 | |
| A | FR-A-1 182 623 (MANUFACTURES DE CHICOREE WILLIOT) <br> * Abstract; page 2, column 1, paragraph 2 * <br> ----- | 1,3 | |

**TECHNICAL FIELDS SEARCHED (Int. Cl.4)**

A 23 F

The present search report has been drawn up for all claims

| Place of search | Date of completion of the search | Examiner |
|---|---|---|
| THE HAGUE | 08-01-1988 | DESMEDT G.R.A. |

EPO FORM 1503 03.82 (P0401)